# FASCICULE DE BREVET EUROPEEN

(11) **EP 1 212 731 B1**
(45) Date de publication et mention de la délivrance du brevet: **12.11.2003**
(21) Numéro de dépôt: 00960811.8
(22) Date de dépôt: 07.09.2000
(51) Int. Cl.: G07B 15/02

(54) **PROCEDE DE GESTION DE STATIONNEMENT DE VEHICULES**
VERFAHREN ZUM VERWALTEN DES PARKENS VON FAHRZEUGEN
VEHICLE PARKING MANAGEMENT METHOD

(30) Priorité: 15.09.1999 FR 9911541
(43) Date de publication de la demande: 12.06.2002
(73) Titulaire: SCHLUMBERGER Systèmes, 92120 Montrouge (FR)
(72) Inventeur: BRUSSEAUX, Thierry, F-25750 Avenay (FR)
(74) Mandataire: Lenne, Laurence
(86) Numéro de dépôt international: FR0002459
(87) Numéro de publication internationale: WO01020558

(56) Documents cités:
- EP-A- 0 447 312
- WO-A-94/01963
- WO-A-94/07206
- WO-A-96/38996
- WO-A-97/45814
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, no. 3, 1 janvier 1998 (1998-01-01), pages 110-117, XP000783249 ISSN: 0014-0171

## Description

La présente invention concerne un procédé de gestion de stationnement payant de véhicules, utilisant au moins un horodateur relié à un serveur de stationnement.

L'invention trouve une application particulièrement avantageuse dans le domaine des parcs de stationnement à horodateurs.

On connaît, notamment de la demande internationale WO 96/11453, un système de gestion de stationnement payant construit autour d'un réseau de téléphonie mobile, dans lequel un usager appelle, au moyen de son téléphone mobile, un serveur de stationnement pour lui indiquer la zone de stationnement choisie, et fournir un identifiant du véhicule tel que le numéro d'immatriculation, et éventuellement un code personnel d'identification. Le serveur de stationnement enregistre les données de l'appel ainsi que l'heure de début de stationnement. Lorsque l'usager quitte le lieu de stationnement, il appelle à nouveau le serveur de stationnement pour l'informer de son départ. Compte tenu de la durée de stationnement et de la tarification en vigueur dans la zone de stationnement, le serveur peut calculer le prix à payer par l'usager et établir une facture soit directement, soit par l'intermédiaire de l'opérateur de téléphonie mobile.

Dans ce système connu, le contrôle s'effectue par des agents de surveillance équipés d'appareils portables leur permettant de consulter le serveur de stationnement par liaison téléphonique afin de savoir si les véhicules en stationnement, identifiés notamment par leur numéro d'immatriculation, ont bien été régulièrement enregistrés auprès du serveur.

Bien qu'il offre un certain nombre d'avantages, le système de gestion de stationnement payant qui vient d'être décrit présente néanmoins quelques inconvénients.

Pour l'usager du système, il est obligatoire d'effectuer, et donc de payer, deux appels téléphoniques en direction du serveur, ce qui peut être très coûteux en comparaison du prix moyen de stationnement. Pour l'opérateur de stationnement, il est nécessaire de munir les agents de surveillance d'un équipement spécial dont le coût d'exploitation est important puisqu'il nécessite un appel téléphonique du serveur de stationnement. De plus, ce travail de surveillance est très long car il faut pour chaque véhicule taper son identifiant, numéro d'immatriculation ou numéro d'identification inscrit sur une étiquette placée de façon visible sur le véhicule.

D'autre part, ce système connu de gestion de stationnement payant n'est pas compatible avec les systèmes existants de paiement, comme les parcs d'horodateurs délivrant un ticket de stationnement à placer derrière le pare-brise du véhicule ou fournissant un listage des numéros de place ou des numéros d'immatriculation des véhicules en stationnement saisis aux horodateurs par les usagers. Il en résulte soit une perte d'information, soit la nécessité d'utiliser des logiciels plus complexes si l'on veut établir des états financiers ou des statistiques pour l'ensemble du système.

Enfin, on peut constater que, si l'usager oublie de signaler son départ au serveur, le temps de stationnement continue d'être débité, ce qui se traduira inévitablement par des contestations de factures.

Aussi, le problème technique à résoudre par l'objet de la présente invention est de proposer un système de gestion de stationnement payant de véhicules, utilisant au moins un horodateur relié à un serveur de stationnement, procédé qui permettrait d'appliquer les moyens de la téléphonie mobile au domaine de stationnement payant sans toutefois présenter les inconvénients mentionnés plus haut.

La solution du problème technique posé consiste, selon la présente invention telle que définie par l'objet de la revendication 1, en ce que , ledit horodateur et des téléphones mobiles étant munis de moyens de communication à courte distance :
- un usager, muni d'un desdits téléphones mobiles, transmet à l'horodateur au moins:
   . des informations concernant l'identité de l'usager,
   . des informations concernant le temps de stationnement,
- l'horodateur fournit à des moyens de contrôle d'autorisation de stationnement, au moins, les informations concernant le temps de stationnement,
- l'horodateur fournit au serveur de stationnement lesdites informations concernant l'identité de l'usager et le prix de stationnement à payer déterminé, au moins, à partir des informations concernant le temps de stationnement, pour facturation à l'usager.

Il existe en effet des systèmes, tels que le système connu sous le nom de « Bluetooth », qui permettent à des téléphones mobiles du type GSM par exemple de communiquer sur des distances limitées, de l'ordre de 100m, avec des équipements informatiques sur une autre fréquence que celle habituellement utilisée pour les communications longue distance. Ces liaisons à courte distance étant gratuites, il résulte immédiatement du procédé conforme à l'invention l'avantage pour l'usager de ne pas avoir à payer de communications téléphoniques avec le serveur de stationnement comme dans le système décrit dans la demande internationale précitée.

On comprend également que, dans le procédé selon l'invention, l'horodateur détient les informations de temps de stationnement nécessaires au contrôle, et que, de ce fait, lesdits moyens de contrôle d'autorisation de stationnement pourront être plus simples et moins coûteux qu'une liaison par téléphone avec le serveur de stationnement.

Selon un premier mode de réalisation de l'invention, lesdits moyens de contrôle d'autorisation de stationnement sont constitués par un ticket de stationnement imprimé par l'horodateur à placer à l'intérieur du véhicule et portant au moins les informations concernant le temps de stationnement. On retrouve ici une utilisation classique d'un horodateur dans sa fonction de délivrance d'un ticket de stationnement.

Selon un deuxième mode de réalisation de l'invention, lesdits moyens de contrôle d'autorisation de stationnement sont constitués par un listage fourni par l'horodateur ou par un appareil de contrôle portable, apte à recevoir des informations en provenance de l'horodateur. Dans ce dernier cas, l'appareil de contrôle portable reçoit les informations de l'horodateur soit par liaison infra-rouge, soit par liaison radio courte-distance. Ces liaisons étant gratuites, elles ne génèrent pas de coûts supplémentaires de communication.

On remarquera enfin que le procédé conforme à l'invention se présente comme un nouveau moyen de paiement sur un horodateur, et que, de ce fait, il est compatible du point de vue comptabilité et statistiques avec les parcs d'horodateurs déjà existants.

La description qui va suivre en regard des dessins annexés, donnés à titre d'exemple non limitatifs, fera bien comprendre en quoi consiste l'invention et comment elle peut être réalisée.

La figure 1 est un schéma d'un premier mode de mise en oeuvre du procédé conforme à l'invention.

La figure 2 est un schéma d'un deuxième mode de mise en oeuvre du procédé conforme à l'invention.

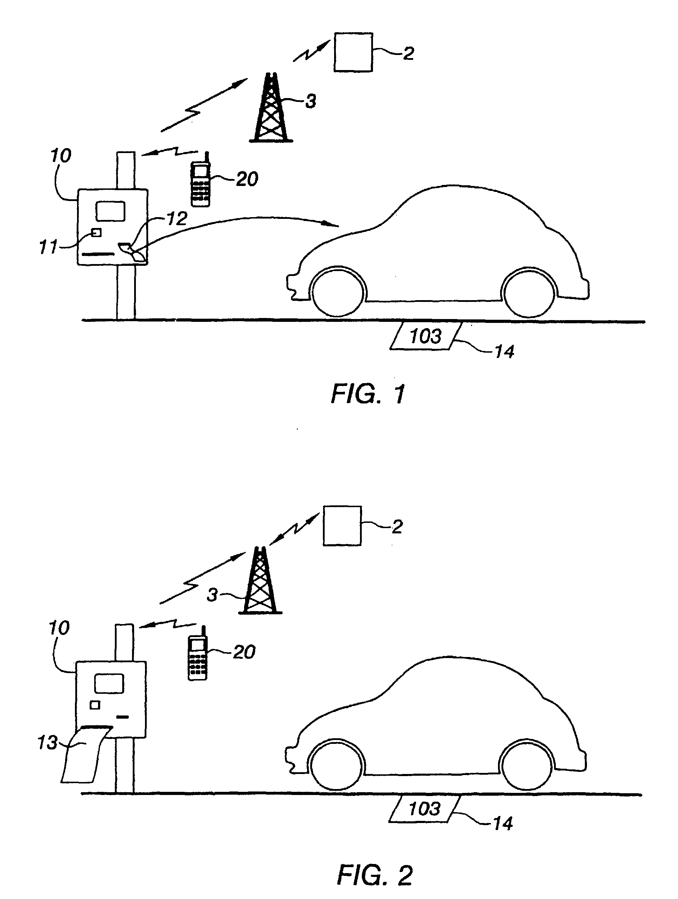

Le schéma de la figure 1 illustre un procédé de stationnement payant de véhicules, utilisant au moins un horodateur 10. Cet horodateur 10 fait partie d'un système de stationnement géré par un serveur 2 et auquel il est relié par exemple à travers un réseau téléphonique 3.

Par ailleurs, l'horodateur 10 est muni d'une interface du type « Bluetooth » lui permettant de communiquer gratuitement et à courte distance avec au moins un téléphone mobile 20 apte à effectuer de telles communications.

Selon le procédé de stationnement payant montré à la figure 1, un usager, muni du téléphone mobile 20, se présente devant l'horodateur 10 et appuie, éventuellement, sur une touche 11 afin de mettre l'horodateur en état de recevoir une communication à courte distance. L'usager compose alors sur son téléphone 20 un message comprenant des informations concernant l'identité de l'usager et des informations concernant le temps de stationnement. Ce message est transmis à l'horodateur 10 selon le mode de communication à courte distance.

A partir des informations reçues du téléphone mobile 20, l'horodateur 10 calcule un certain nombre de paramètres, tels que l'heure de fin de stationnement autorisé et le prix de stationnement à payer par l'usager en fonction de la tarification en vigueur. L'horodateur 10 peut alors imprimer un ticket 12, faisant office de moyen de contrôle d'autorisation de stationnement. Le ticket 12 indiquant par exemple la date et l'heure de fin de stationnement autorisé est placé à l'intérieur du véhicule de manière visible afin de permettre un contrôle visuel par les agents de surveillance.

Le prix de stationnement est stocké dans une mémoire de l'horodateur 10 et communiqué périodiquement au serveur 2 de stationnement pour compensation. L'usager reçoit une facture du montant de cette somme qu'il doit régler directement auprès de l'opérateur de stationnement.

D'autres modes de paiement peuvent être envisagés tels que le débit d'un compte prépayé ouvert auprès de l'opérateur du serveur 2 de stationnement. Pour recharger son compte, l'usager achète une carte prépayée grattable de 100F de droits de stationnement par exemple, appelle l'horodateur avec son téléphone mobile et tape le numéro inscrit sur la carte grattable, l'information est ensuite transmise au serveur de stationnement de manière à créditer de 100F le compte prépayé de l'usager.

Bien entendu, au lieu de fournir à l'horodateur 10 une durée de stationnement, l'usager pourrait fournir directement le prix de stationnement qu'il souhaite payer, l'horodateur convertissant ce prix en durée de stationnement en fonction de la tarification en vigueur.

Si le même horodateur 10 est susceptible de couvrir plusieurs zones de tarification différente, alors l'usager doit indiquer à l'horodateur la zone dans laquelle se trouve son véhicule sous forme d'informations concernant le lieu de stationnement du véhicule, notamment un numéro caractéristique 14 de la zone tarifaire du lieu de stationnement, içi le numéro « 103 » de l'emplacement de parking. A partir de ce numéro, l'horodateur saura déterminer quel tarif il doit appliquer. Une indication du tarif appliqué apparaît sur le ticket 12 délivré par l'horodateur 10.

Le mode de mise en oeuvre du procédé selon l'invention représenté sur la figure 2 diffère de celui de la figure 1 en ce que l'usager, à son arrivée sur le lieu de stationnement, transmet à l'horodateur 10 avec son téléphone mobile 20 non seulement les informations concernant l'identité de l'usager et les informations concernant le temps de stationnement, durée ou prix comme précédemment, mais également des informations d'identification du véhicule en stationnement, telles que le numéro d'immatriculation du véhicule, un numéro d'identification apposé sur le véhicule (numéro d'abonné de l'usager au système de stationnement payant par exemple) ou un numéro caractéristique 14 de l'emplacement de stationnement, ce dernier pouvant servir au besoin d'identification de la zone tarifaire.

Le contrôle s'effectue de la façon suivante. A la demande d'un agent de surveillance, l'horodateur 10 fournit un listage 13 de contrôle d'autorisation de stationnement sur lequel sont indiquées les informations d'identification du véhicule en stationnement, numéro d'immatriculation ou d'identification, et les informations concernant le temps de stationnement, durée et heure de début de stationnement.

La facturation à l'usager s'effectue comme dans le mode de mise en oeuvre représenté sur la figure 1.

Selon une variante avantageuse du mode de mise en oeuvre du procédé de la figure 2, l'usager envoie dans un premier message téléphonique à courte distance à l'horodateur 10 comportant les informations concernant le temps de stationnement non pas sous forme de durée ou de prix mais uniquement par l'heure de début de stationnement. Lors d'un contrôle, le listage 13 fourni par l'horodateur 10 à un agent de surveillance indiquera que le véhicule identifié par son numéro d'immatriculation, son numéro d'identification ou son numéro d'emplacement est autorisé à stationner depuis ladite heure de début de stationnement.

Lorsque l'usager décide de quitter son stationnement, il envoie un deuxième message téléphonique à l'horodateur 10 les informations concernant l'identification du véhicule en stationnement et l'heure de fin de stationnement. Lors d'un contrôle, le listage 13 aura fait disparaître depuis l'heure de fin de stationnement l'identification du véhicule, indiquant que le véhicule correspondant n'est plus en situation de stationnement autorisé.

Le prix à payer par l'usager est calculé à partir de la tarification en vigueur, déduite des informations concernant le lieu de stationnement, et de la durée de stationnement obtenue par la différence entre les heures de fin et de début de stationnement.

On notera que, dans ce mode de mise en oeuvre, l'usager paye pour la durée réelle du stationnement, alors que dans le cas de la figure 1 le stationnement est prépayé pour une durée forfaitaire donnée.

Le procédé de stationnement payant, objet de l'invention, a été décrit en regard de la figure 2 en mettant en oeuvre un listage 13 comme moyens de contrôle d'autorisation de stationnement. Il est bien entendu que d'autres moyens pourraient être utilisés, tel qu'un dispositif portable apte à recevoir des informations de l'horodateur 10 par liaison infra-rouge ou radio courte-distance, comme celà a déjà été indiqué plus haut.

Il est également prévu que l'horodateur 10 envoie au téléphone mobile 20 un certificat électronique calculé au moins à partir d'informations relatives à l'usager, comme son numéro d'abonné ou son numéro de compte, des informations concernant l'identification du lieu de stationnement et des informations concernant le temps de stationnement. Ce certificat est stocké dans la mémoire du téléphone ou dans celle de la carte SIM. Si la mémoire le permet, plusieurs certificats (10 par exemple) peuvent être stockés dans un fichier tournant.

Ce certificat sert de justificatif à l'usager pour prouver son paiement en cas d'amende ou autre difficulté. Il peut alors se rendre auprès de l'opérateur du système de-stationnement avec son téléphone mobile et faire constater son paiement grâce au certificat stocké en mémoire. Ce certificat sert aussi à l'usager de rappel de l'heure de fin de stationnement autorisé.

## Revendications

1. Procédé de gestion de stationnement payant de véhicules, utilisant au moins un horodateur (10) relié à un serveur (2) de stationnement et des téléphones mobiles, **caractérisé en ce que**, ledit horodateur (10) et lesdits téléphones mobiles communiquent par l'intermédiaire de moyens de communication à courte distance et **en ce que** :
- un usager, muni d'un (20) desdits téléphones mobiles, transmet à l'horodateur (10) au moins:
. des informations concernant l'identité de l'usager,
. des informations concernant le temps de stationnement,
- l'horodateur (10) fournit à des moyens (12, 13) de contrôle d'autorisation de stationnement, au moins, les informations concernant le temps de stationnement,
- l'horodateur (10) fournit au serveur (2) de stationnement lesdites informations concernant l'identité de l'usager et le prix de stationnement à payer déterminé, au moins, à partir des informations concernant le temps de stationnement, pour facturation à l'usager.

2. Procédé selon la revendication 1, **caractérisé en ce que** les informations concernant le temps de stationnement sont constituées par une durée ou un prix de stationnement défini par l'usager.

3. Procédé selon l'une des revendications 1 ou 2, **caractérisé en ce que** lesdits moyens de contrôle d'autorisation de stationnement sont constitués par un ticket (12) de stationnement imprimé par l'horodateur (10) à placer à l'intérieur du véhicule et portant au moins les informations concernant le temps de stationnement.

4. Procédé selon l'une quelconque des revendications 1 à 3, **caractérisé en ce que** l'usager transmet également à l'horodateur (10) des informations concernant l'identification du lieu de stationnement du véhicule, et **en ce que** l'horodateur (10) fournit également auxdits moyens de contrôle d'autorisation de stationnement lesdites informations concernant l'identification du lieu de stationnement du véhicule.

5. Procédé selon la revendication 1, **caractérisé en ce que** l'usager fournit également à l'horodateur (10) des informations d'identification du véhicule en stationnement.

6. Procédé selon la revendication 5, **caractérisé en ce que** les informations d'identification du véhicule en stationnement sont le numéro d'immatriculation du véhicule, un numéro d'identification apposé sur le véhicule ou un numéro caractéristique (14) de l'emplacement de stationnement du véhicule.

7. Procédé selon l'une des revendications 5 ou 6, **caractérisé en ce que** les informations concernant le temps de stationnement sont constituées par une durée ou un prix de stationnement défini par l'usager.

8. Procédé selon l'une des revendications 5 ou 6, **caractérisé en ce que** les informations concernant le temps de stationnement sont constituées par l'heure de début de stationnement et l'heure de fin de stationnement respectivement transmises à l'horodateur (10) à l'arrivée et au départ du véhicule du lieu de stationnement.

9. Procédé selon l'une quelconque des revendications 5 à 8, **caractérisé en ce que** lesdits moyens de contrôle d'autorisation de stationnement sont constitués par un listage (13) fourni par l'horodateur (10) ou par un appareil de contrôle portable apte à recevoir des informations en provenance de l'horodateur (10).

10. Procédé selon l'une quelconque des revendications 1 à 9, **caractérisé en ce que** les informations concernant l'identification du lieu de stationnement du véhicule comprennent également un numéro caractéristique (14) de la zone tarifaire du lieu de stationnement.

11. Procédé selon l'une quelconque des revendications 1 à 10, **caractérisé en ce que** l' horodateur envoie au téléphone mobile (20) un certificat électronique calculé au moins à partir d'informations relatives à l'usager, des informations concernant le lieu de stationnement du véhicule et des informations concernant le temps de stationnement.

12. Procédé selon l'une quelconque des revendications 1 à 11, **caractérisé en ce que** le prix de stationnement est débité d'un compte prépayé auprès de l'opérateur du serveur (2) de stationnement.

13. Procédé selon la revendication 12, **caractérisé en ce que** ledit compte prépayé est rechargeable au moyen d'une carte prépayée grattable.

## Patentansprüche

1. Verfahren zur Verwaltung des gebührenpflichtigen Parkens von Fahrzeugen, das mindestens einen Parkscheinautomat (10) verwendet, der mit einem Parkserver (2) und mit Mobiltelefonen verbunden ist, **dadurch gekennzeichnet, dass** der genannte Parkscheinautomat (10) und die genannten Mobiltelefone über Kurzstrecken-Kommunikationsmittel kommunizieren und dass:
- ein mit einem (20) der genannten Mobiltelefone ausgestatteter Benutzer dem Parkscheinautomat (10) mindestens folgendes übermittelt:
- Informationen über die Identität des Benutzers,
- Informationen über die Parkzeit,
- der Parkscheinautomat (10) den Kontrollmitteln (12, 13) zur Freigabe des Parkens mindestens die Informationen über die Parkzeit liefert,
- der Parkscheinautomat (10) dem Parkserver (2) mindestens die genannten Informationen über die Identität des Benutzers und die festgesetzte zu zahlende Parkgebühr ausgehend von den Informationen über die Parkzeit zur Fakturierung des Benutzers liefert.

2. Verfahren nach Anspruch 1, **dadurch gekennzeichnet, dass** die Informationen über die Parkzeit durch eine vom Benutzer bestimmte Parkdauer oder Parkgebühr gebildet werden.

3. Verfahren nach dem vorgenannten Anspruch 1 oder 2, **dadurch gekennzeichnet, dass** die genannten Kontrollmittel zur Freigabe des Parkens durch einen vom Parkscheinautomat (10) gedruckten Parkschein (12) gebildet werden, der in das Innere des Fahrzeugs zu legen ist und mindestens die Informationen über die Parkzeit enthält.

4. Verfahren nach einem beliebigen vorgenannten Anspruch 1 bis 3, **dadurch gekennzeichnet, dass** der Benutzer dem Parkscheinautomat (10) ebenfalls Informationen zur Identifizierung des Parkorts des Fahrzeugs übermittelt, und dass der Parkscheinautomat (10) den genannten Kontrollmitteln zur Freigabe des Parkens ebenfalls die genannten Informationen zur Identifizierung des Parkorts des Fahrzeugs liefert.

5. Verfahren nach Anspruch 1, **dadurch gekennzeichnet, dass** der Benutzer dem Parkscheinautomat (10) ebenfalls Informationen zur Identifizierung des geparkten Fahrzeugs liefert.

6. Verfahren nach Anspruch 5, **dadurch gekennzeichnet, dass** die Informationen zur Identifizierung des geparkten Fahrzeugs die Zulassungsnummer des Fahrzeugs, eine auf dem Fahrzeug angebrachte Kennummer oder eine charakteristische Nummer (14) des Parkplatzes des Fahrzeugs sind.

7. Verfahren nach dem vorgenannten Anspruch 5 oder 6, **dadurch gekennzeichnet, dass** die Informationen über die Parkzeit durch eine vom Benutzer bestimmte Parkdauer oder Parkgebühr gebildet werden.

8. Verfahren nach dem vorgenannten Anspruch 5 oder 6, **dadurch gekennzeichnet, dass** die Informationen über die Parkzeit durch die Parkbeginnzeit und die Parkendzeit gebildet werden, die dem Parkscheinautomat (10) jeweils bei Ankunft und Abfahrt des Fahrzeugs am Parkort übermittelt werden.

9. Verfahren nach einem beliebigen vorgenannten Anspruch 5 bis 8, **dadurch gekennzeichnet, dass** die genannten Kontrollmittel zur Freigabe des Parkens durch ein Listing (13) gebildet werden, das vom Parkscheinautomat (10) oder von einem tragbaren Kontrollgerät geliefert wird, das fähig ist, vom Parkscheinautomat (10) kommende Informationen zu empfangen.

10. Verfahren nach einem beliebigen vorgenannten Anspruch 1 bis 9, **dadurch gekennzeichnet, dass** die Informationen zur Identifizierung des Parkorts des Fahrzeugs ebenfalls eine charakteristische Nummer (14) der Gebührenzone des Parkorts enthalten.

11. Verfahren nach einem beliebigen vorgenannten Anspruch 1 bis 10, **dadurch gekennzeichnet, dass** der Parkscheinautomat dem Mobiltelefon (20) ein elektronisches Zertifikat sendet, das mindestens ausgehend von den Informationen über den Benutzer, den Informationen über den Parkort des Fahrzeugs und den Informationen über die Parkzeit berechnet wird.

12. Verfahren nach einem beliebigen vorgenannten Anspruch 1 bis 11, **dadurch gekennzeichnet, dass** die Parkgebühr von einem beim Parkserverprovider (2) vorbezahlten Konto abgebucht wird.

13. Verfahren nach dem Anspruch 12, **dadurch gekennzeichnet, dass** das genannte vorbezahlte Konto mit einer vorbezahlten Karte aufladbar ist.

## Claims

1. Method for the management of pay parking of vehicles using at least one Pay & Display machine (10) connected to a parking server (2) and mobile telephones, **characterised in that** the said Pay & Display machine (10) and the said mobile telephones communicate through short-range communication means, where:
- A user with one of the said mobile telephones (20) transmits to the Pay & Display machine (10) at least the following:
- information about the identity of the user,
- information about the parking time,
- The Pay & Display machine (10) supplies the parking time information as a minimum to parking payment enforcement means (12, 13),
- The Pay & Display machine (10) supplies to the parking server (2) the said information about the identity of the user and the parking fee calculated as minimum from information about the parking time in order to charge the fee to the user.

2. Method according to claim 1, **characterised in that** the information about the parking time is made up of a parking time or fee defined by the user.

3. Method according to claim 1 or 2, **characterised in that** the said parking payment enforcement means comprise a parking ticket (12) printed by the Pay & Display machine (10) that is to be placed inside the car, which ticket contains at least information about the parking time.

4. Method according to any claim from 1 to 3, **characterised in that** the user also provides the Pay & Display machine (10) with information about the identification of the space where the vehicle is parked and that the Pay & Display machine (10) also provides the said information about the identification of the space where the vehicle is parked to the payment enforcement means.

5. Method according to claim 1, **characterised in that** the user provides the Pay & Display machine (10) with information about the identification of the parked vehicle.

6. Method according to claim 5, **characterised in that** the vehicle identification information includes the vehicle registration number, an identification number placed on the vehicle or a number (14) characteristic of the space in which the vehicle is parked.

7. Method according to any of claims 5 or 6, **characterised in that** the information about parking time includes a parking time or fee defined by the user.

8. Method according to any of claims 5 or 6, **characterised in that** the information about the parking time includes the parking starting time and ending time, provided to the Pay & Display machine (10) when the vehicle reaches and leaves the parking space respectively.

9. Method according to any claim from 5 to 8, **characterised in that** the said payment enforcement means comprise a list (13) supplied by the Pay & Display machine (10) or by a handheld checking device that is capable of receiving information from the Pay & Display machine (10).

10. Method according to any claim from 1 to 9, **characterised in that** information about the identification of the space where the vehicle is parked also includes a number characteristic (14) of the tariff zone of the parking space.

11. Method according to any claim from 1 to 10, **characterised in that** the Pay & Display machine sends to the mobile telephone (20) an electronic certificate calculated as a minimum from the information about the user, the parking space and the parking time.

12. Method according to any claim from 1 to 11, **characterised in that** the parking price is debited from a prepaid account with the operator of the parking server (2).

13. Method according to claim 12, **characterised in that** the said prepaid account is rechargeable with a prepaid scratch card.
